# EUROPEAN PATENT SPECIFICATION

(11) **EP 2 179 912 B1**
(45) Date of publication and mention of the grant of the patent: **01.01.2014**
(21) Application number: 09013058.4
(22) Date of filing: 15.10.2009
(51) Int. Cl.: B62J 6/00, B62J 6/02, B62J 17/02

(54) **Scooter type vehicle**
Rollerartiges Fahrzeug
Véhicule de type scooter

(30) Priority: 13.10.2009 JP 2009235907; 23.10.2008 JP 2008272845
(43) Date of publication of application: 28.04.2010
(73) Proprietor: Yamaha Hatsudoki Kabushiki Kaisha, Iwata-shi, Shizuoka 438-8501 (JP)
(72) Inventor: Tsai, Kun Lin, Iwata-shi Shizuoka-ken 438-8501 (JP); Takayuki, Asai, Iwata-shi Shizuoka-ken 438-8501 (JP); Masaru, Ohira, Iwata-shi Shizuoka-ken 438-8501 (JP)
(74) Representative: Grünecker, Kinkeldey, Stockmair & Schwanhäusser

(56) References cited:
- EP-A1- 2 017 168
- EP-A2- 0 953 500
- EP-A2- 2 028 413
- JP-A- 8 301 171
- JP-A- 2002 068 058

## Description

### BACKGROUND OF THE INVENTION

### Field of the Invention

The present invention relates to a scooter type vehicle according to the preamble of independent claim 1.

### Description of Related Art

JP 10-226374 A describes a scooter type vehicle having a front cover for covering a frontward area of a head pipe, a leg shield for covering a rearward area of the head pipe, and a foot board joined to a lower part of the leg shield. The scooter type vehicle has a headlight fitted to an upper portion of the front cover. It also has flashers fitted on the left and right of the front cover.

A steering shaft is supported rotatably by a head pipe. A handlebar is secured to a top end portion of the steering shaft. A front fork is secured to a bottom end portion of the steering shaft. A front wheel is supported rotatably by a lower end portion of the front fork The upper half portion of the front wheel is covered by a movable type front fender that turns together with the handlebar.

The movable type front fender has the mudguard function to prevent the rider from being splashed with the mud thrown up by the front wheel. With the movable type front fender, it is possible to prevent the rider sufficiently from being splashed with mud even if the front cover is not particularly large. Thus, the above-described scooter type vehicle enables the front cover to be compact in size while ensuring a sufficient mudguard function. Moreover, the movable type front fender can turn together with the front wheel; therefore, unlike the stationary type front fender, it is not necessary to cover a wide area that surrounds the front wheel. As a result, the scooter type vehicle enables the front fender to be compact while ensuring a sufficient mudguard function.

A scooter type vehicle in which a handle cover that is a separate part from the front cover is provided in front of the handlebar and a headlight or flashers is/are provided in the handle cover is know. In this scooter type vehicle, the handle cover tends to be large in size because the handle cover needs to have a space for installing the headlight or flashers. In the scooter type vehicle described in JP 10-226374A, however, a headlight and left and right flashers are fitted to an upper portion of the front cover that covers a frontward area of the head pipe. For this reason, the scooter type vehicle described in JP 10-226374A enables a portion surrounding the handlebar to be compact in size.

Nevertheless, in the scooter type vehicle described in JP 10-226374A, the headlight and the left and right flashers are arrayed at an upper portion of the front cover along a vehicle width direction. For this reason, it is necessary to ensure a sufficient gap between the headlight and the left and right flashers in order to ensure visibility of the light from the headlight and the light from the left and right flashers. To ensure the just-mentioned gap, it is necessary to make an upper portion of the front cover large along a vehicle width direction. This results in the problem that the front portion of the vehicle becomes large.
Further, there is known a scooter type vehicle with the elements of the preamble of claim 1 from EP 0 953 500. Moreover, JP 08 301171 and JP 2002/068058 refer to scooter type vehicles.

### BRIEF SUMMARY OF THE INVENTION

It is an object of the present invention to provide a scooter type vehicle that enables a front portion of the vehicle to be compact in size while ensuring the visibility of the flashers and a sufficient mudguard function.

The above objective, according to the present invention, is performed by a scooter type vehicle having the features of claim 1.

The present invention allows a front portion of the vehicle to be compact in size while ensuring visibility of the flashers and a sufficient mudguard function.

Preferred embodiments are laid down in the further subclaims.

### BRIEF DESCRIPTION OF THE DRAWINGS

Fig. 1 is a front view of a motor scooter;
Fig. 2 is a left side view of a portion of the motor scooter;
Fig. 3 is a left side view of a portion of the motor scooter;
Fig. 4 is a plan view of a portion of the motor scooter;
Fig. 5 is a plan view of the portion of the motor scooter on which flashers are not disposed;
Fig. 6 is a left side view illustrating the internal structure of a portion of the motor scooter;
Fig. 7 is a cross-sectional view taken along line VII-VII of Fig. 3;
Fig. 8 is a cross-sectional view taken along line VIII-VIII of Fig. 3;
Fig. 9 is a cross-sectional view taken along line IX-IX of Fig. 3;
Fig. 10A is a cross-sectional view corresponding to Fig. 9, illustrating the state in which the handle bar is turned to the right, and Fig. 10B is a cross-sectional view corresponding to Fig. 9, illustrating the state in which the handle bar is turned to the left; and
Figs. 11A and 11B are cross-sectional views illustrating how the center cover and the side cover are fitted.

### DETAILED DESCRIPTION OF THE INVENTION

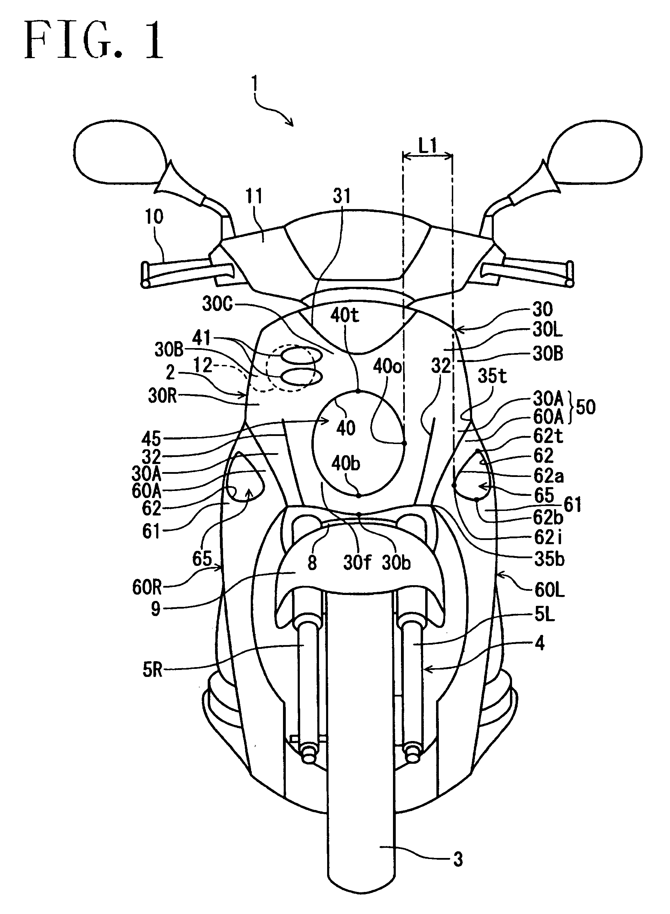

As illustrated in Figs. 1 to 4, a motor scooter 1 according to the present embodiment is furnished with a center cover 30 and a front cover 2 having a pair of left and right side covers: 60L and 60R. It should be noted that the terms "front," "rear," "left," and "right" refer to front, rear, left, and right as defined based on the perspective of the rider of the motor scooter 1, respectively.

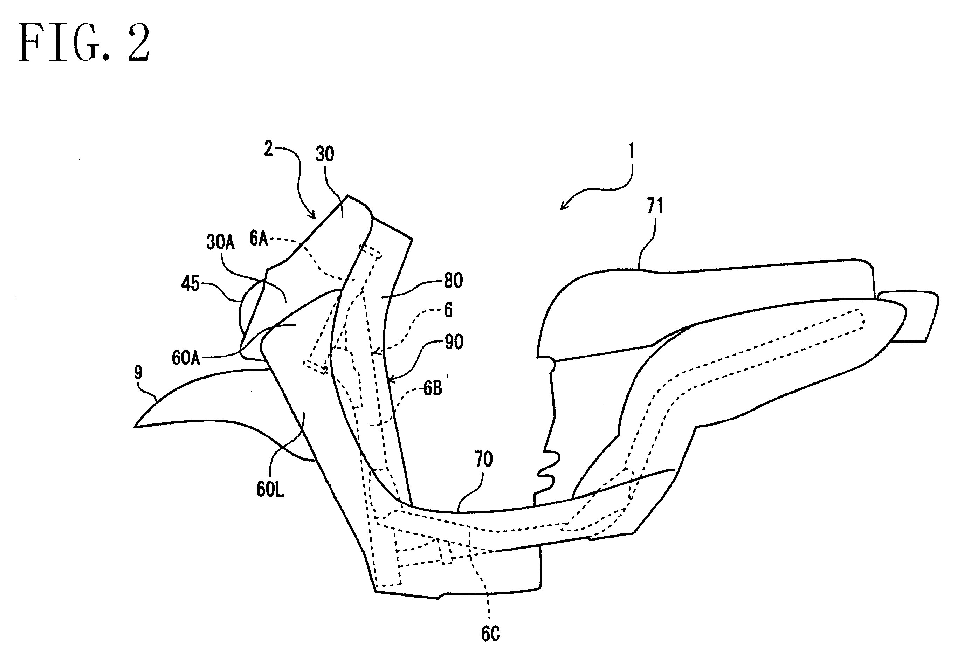

As illustrated in Fig. 2, the motor scooter 1 has a body frame 6. The body frame 6 has a the head pipe 6A, a down frame portion 6B extending from the head pipe 6A obliquely in a downward and rearward direction, and a rear frame portion 6C extending from a bottom portion of the down frame portion 6B in a rearward direction. The rear frame portion 6C is joined to the down frame portion 6B by welding, for example. A foot board 70 is provided above the rear frame portion 6C. The foot board 70 is joined to a lower part of the front cover 2. The front cover 2 and the foot board 70 constitute a vehicle body cover 90. A seat 71 is provided obliquely above and at the rear of the foot board 70. It should be noted that Fig. 2 is merely for illustrating the body frame 6, and the specific shape of the front cover 2 therein is different from that of the embodiment (i.e., that having a shape as illustrated in Fig. 1). In addition, a later-described flasher 65 and so forth are not depicted in Fig. 2.

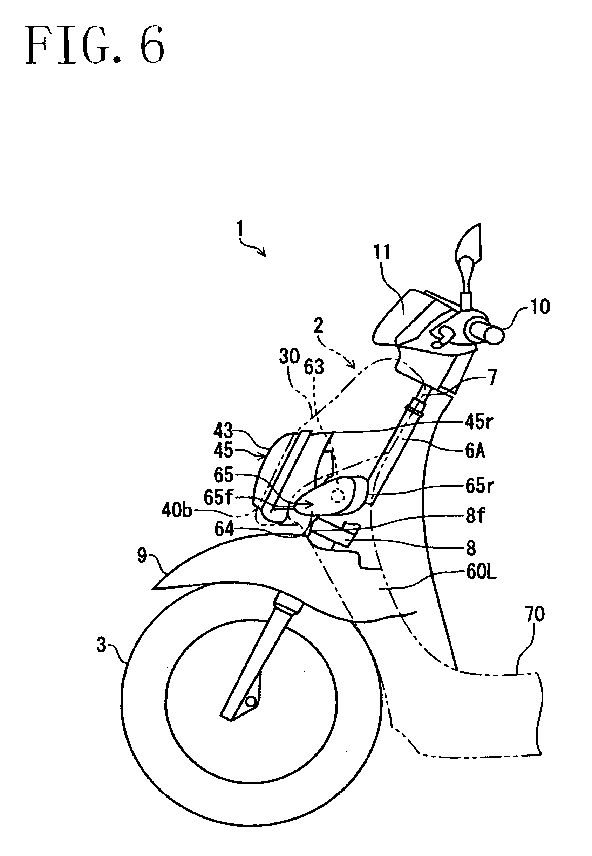

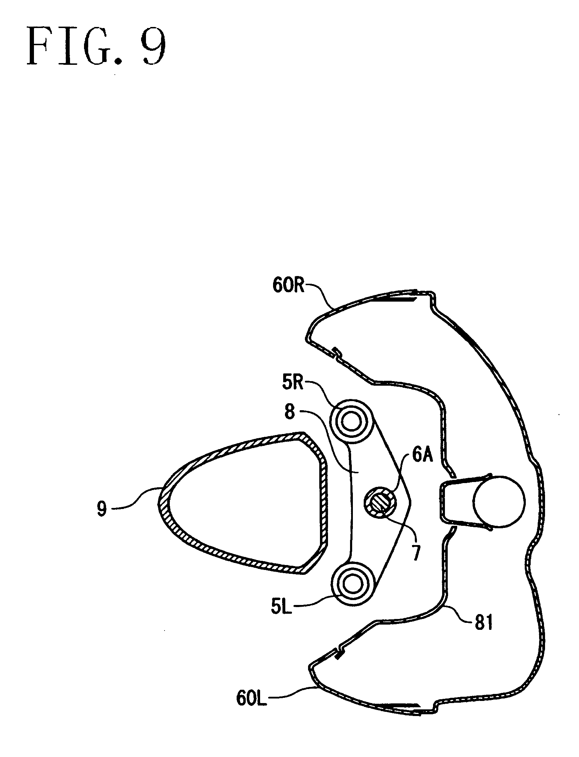

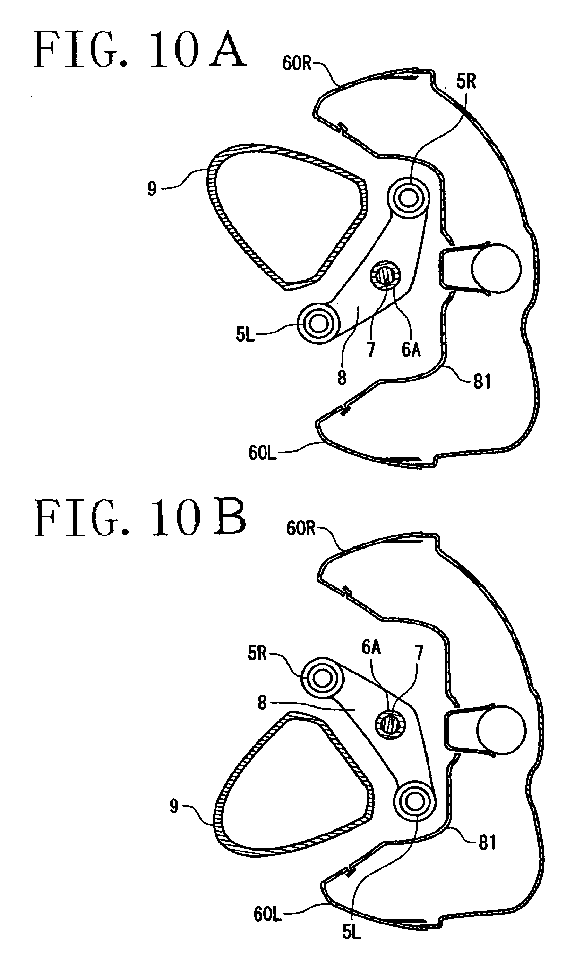

As illustrated in Fig. 1, the motor scooter 1 is furnished with a front wheel 3 and a front fork 4 for supporting the front wheel 3. The front fork 4 has a pair of left and right fork pipes 5L and 5R, a steering shaft 7 (see Fig. 6) supported rotatably by the head pipe 6A, an under bracket 8 for joining a lower end portion of the steering shaft 7 to the fork pipes 5L and 5R. As illustrated in Fig. 9, the steering shaft 7 is supported at the center of the under bracket 8. The fork pipes 5L and 5R are supported so as to be on the left and right of a portion of the under bracket 8 at which the steering shaft 7 is supported. As illustrated in Fig. 1, what is called a movable type front fender 9 is disposed above the front wheel 3. The front fender 9 is one example of the "mudguard body" of the present invention. The front fender 9 is positioned below the under bracket 8. The front fender 9 is secured to the under bracket 8. The fork pipes 5L and 5R pierce through the front fender 9 and extend obliquely in a rearward and upward direction. When the rider turns a handlebar 10, the steering shaft 7, the fork pipes 5L and 5R, and the under bracket 8 turn accordingly, causing the front wheel 3 to turn. The front fender 9 turns in association with the turning of the handlebar 10. The front fender 9 turns together with the under bracket 8. Fig. 10A shows the state in which the handlebar 10 is turned to the right, and Fig. 10B shows the state in which the handlebar 10 is turned to the left. Here, the front fender 9 may be positioned above the under bracket 8. In addition, the front fender 9 may be disposed so as to surround the surrounding area of the under bracket 8 without vertically overlapping the under bracket 8.

As illustrated in Fig. 6, the handlebar 10 is disposed on top of and at the rear of the head pipe 6A. A handle cover 11 is provided for the handlebar 10. The handle cover 11 covers at least a frontward area of the handlebar 10. The handle cover 11 is formed of a separate part from the front cover 2.

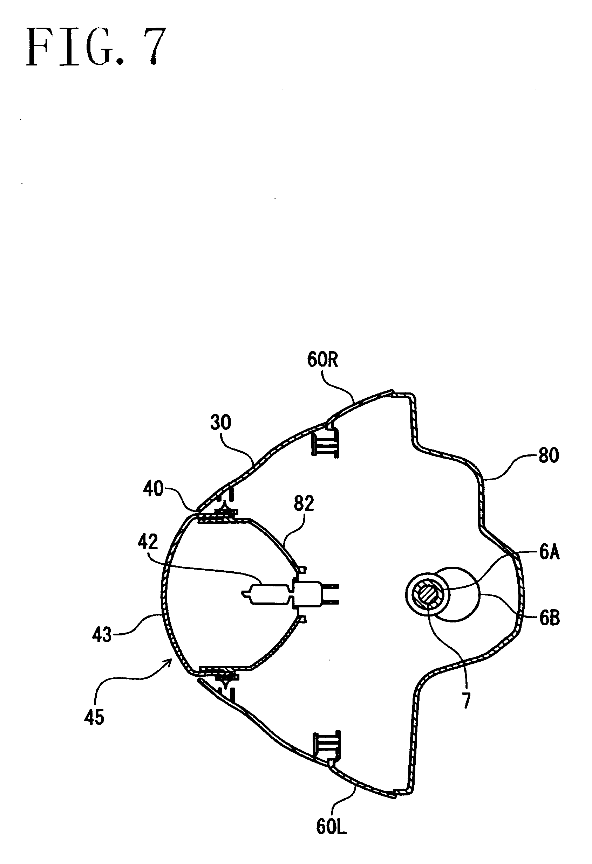

The front cover 2 comprises the center cover 30, side covers 60L and 60R, a rear cover 80 (see Fig. 7), and an inner fender 81 (see Fig. 9). The center cover 30, the left side cover 60L, and the right side cover 60R are separate parts that are assembled together. They may also be provided for integral in other embodiments. The center cover 30 is disposed in front of the head pipe 6A. The side covers 60L and 60R are joined to the center cover 30. The rear cover 80 is positioned at the rear of the head pipe 6A. The rear cover 80 is joined to the center cover 30 and the side covers 60L and 60R. The front cover 2 of the present embodiment corresponds to the "front cover portion" of the present invention. It should be noted that the front cover 2 of the present embodiment is merely one illustrative example, and ones having a cover with a different, in particular subdivided, configuration are also within the scope of the present invention. For example, each of the side covers 60L and 60R may be divided vertically into two parts. In addition, the rear cover 80 may comprise a plurality of covers. The foot board 70, preferably, is joined seamlessly to the rear cover 80.

### <<Center Cover>>

As illustrated in Fig. 1, the center cover 30 is disposed above the front wheel 3 as viewed from the front. More specifically, the center cover 30 is disposed above the front fender 9. As viewed from the front, the center cover 30 is disposed below a handle cover 11. In the present embodiment, a lower end portion of the handle cover 11 is placed inside the center cover 30. In other words, the lower end portion of the handle cover 11 and the upper end portion of the center cover 30 overlap with each other vertically. It should be noted that the lower end portion of the handle cover 11 may be positioned upward of the upper end portion of the center cover 30. In other words, the lower end portion of the handle cover 11 and the upper end portion of the center cover 30 may not overlap with each other vertically.

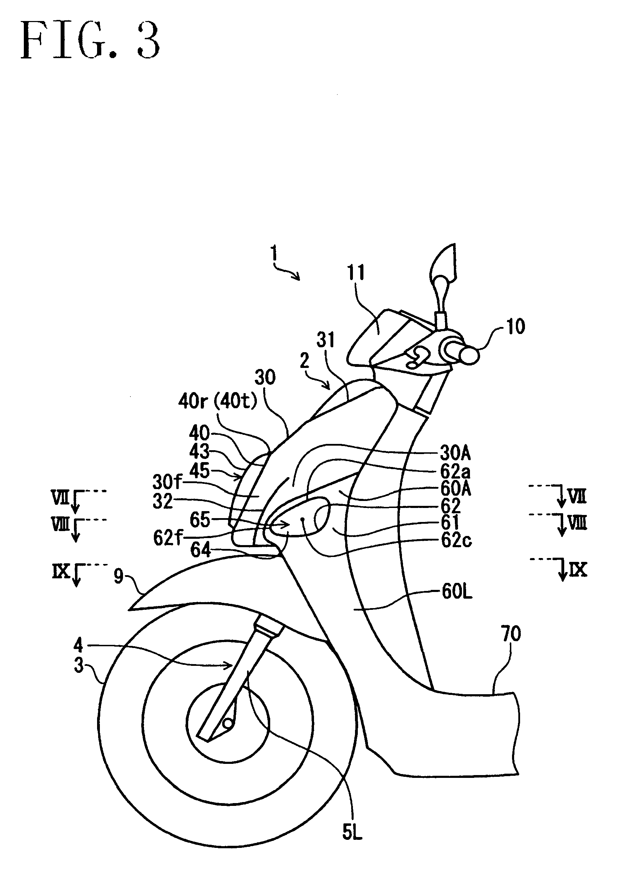

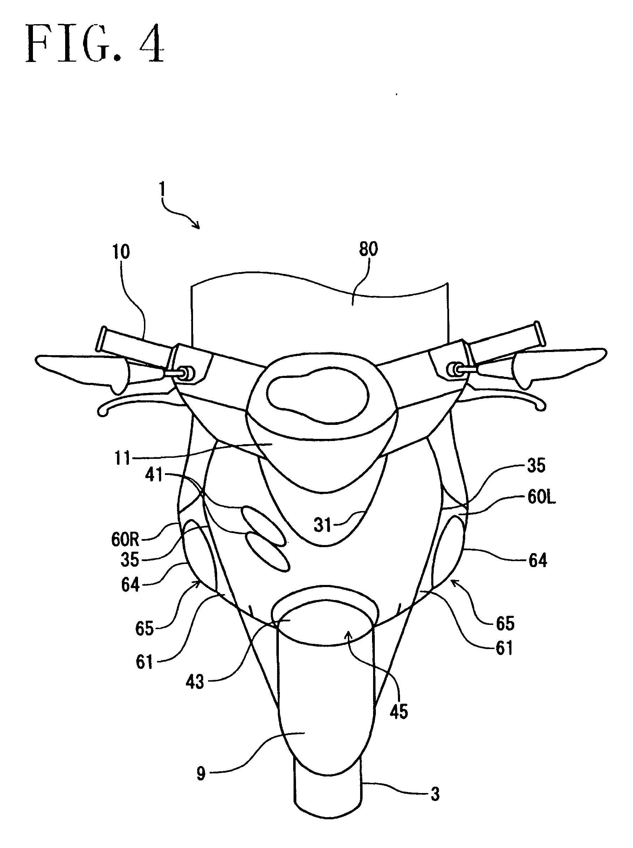

As illustrated in Fig. 3, the center cover 30 slopes down forward, as viewed from a side of the vehicle. The entire center cover 30 is curved so that its vehicle-widthwise outer side portions are positioned rearward of its vehicle-widthwise center portion. In other words, the center cover 30 is curved so as to surround a surrounding area of the head pipe 6A (see Fig. 4). The center cover 30 has a bulging portion 30f bulging forward toward a headlight opening 40. As illustrated in Fig. 1, the center cover 30 includes bottom outer end portions 30A each of which is formed in such a shape as to be closer and closer to the vehicle-widthwise center as its level lowers, as viewed from the front, and top outer end portions 30B each of which is positioned upward of the bottom outer end portions 30A and is formed in such a shape as to be closer and closer to the vehicle-widthwise center as its level rises, as viewed from the front. Each bottom outer end portion 30A is formed so that, as viewed from the front, its upper portion is positioned vehicle-widthwise outward of its lower portion. Each top outer end portion 30B is formed so that, as viewed from the front, its lower portion is positioned vehicle-widthwise outward of its upper portion.

As illustrated in Fig.1, the headlight opening 40 is formed in a vehicle-widthwise center and vertically lower area of the center cover 30. The headlight opening 40 is formed in an elliptical shape whose vertical length is longer than its lateral length. The number of the headlight opening 40 formed in the center cover 30 is one. The lateral length of the headlight opening 40 is set at about 1/2 of the maximum lateral length of the center cover 30. The vertical length of the headlight opening 40 is set at about 1/2 of the maximum vertical length of the center cover 30. Thus, the headlight opening 40 is formed in a relatively large size in the present embodiment.

As illustrated in Fig. 7, a headlight 45 is disposed in the headlight opening 40. The headlight 45 includes a housing 82, a bulb 42, and a lens 43. The lens 43, which covers an outward area of the bulb 42, is fitted in the headlight opening 40. As illustrated in Fig. 3, the lens 43, as well as the center cover 30, slopes down forward, as viewed from a side of the vehicle. The lens 43 protrudes forward from the center cover 30. A top end 40t of the headlight 45 also protrudes forward from the center cover 30.

As illustrated in Fig. 1, the center cover 30 has one or more horn holes 41 formed therein. The horn holes 41 are formed in an upper right portion of the center cover 30 as viewed from the front. In the present embodiment, the number of the horn holes 41 provided is two. Each of the horn holes 41 is formed in substantially an elliptical shape as viewed from the front. The horn holes 41 are arranged so as to be lined up vertically. The horn holes 41 are formed at positions higher than the headlight opening 40. A horn 12 is disposed at the rear of the horn holes 41.

A valley line 31 in a substantially V shape as viewed from the front, and valley lines 32 extending vertically are formed in the front face side of the center cover 30. The valley lines 32 are positioned vehicle-widthwise outward of the headlight opening 40. The valley lines 32 are formed in a lower portion of the center cover 30. The valley lines 32 are positioned more and more vehicle-widthwise outward toward the top, as viewed from the front. The valley lines 32 are provided on the left and on the right, respectively. The center cover 30 comprises a central portion 30C positioned between the left and right valley lines 32, and side portions 30L and 30R positioned vehicle-widthwise outward of the valley lines 32. The portion inside the valley lines 32 and the portions outside the valley lines 32, in other words, the central portion 30C and the side portions 30L and 30R, are formed so that their surface slopes are different from each other. It is possible to form ridge lines in place of the valley lines 32. Herein, the term "valley line" refers to a line formed by a continuous line-like portion that is recessed from both sides thereof. The term "ridge line" refers to a line formed by a continuous line-like portion that protrudes from both sides thereof.

As illustrated in Fig. 1, the front cover 2 forms a contour such as to be recessed inward at boundary portions 50 between the center cover 30 and the side covers 60L and 60R, as viewed from the front. Each of the boundary portions 50 includes the bottom outer end portion 30A that is a boundary portion of the center cover 30 from the side cover 60L or 60R, and a top end portion 60A that is a boundary portion of each of the side covers 60L and 60R from the center cover 30. The portion of the bottom outer end portion 30A of the center cover 30 that is upward of a top end 35t, i.e., the top outer end portion 30B, is formed in such a shape that its width becomes narrower and narrower toward the top, as viewed from the front. Also, the bottom outer end portion 30A of the center cover 30 that is lower than the top end 35t is formed in such a shape that its widths becomes narrower and narrower toward the bottom, as viewed from the front. The bottom outer end portion 30A is formed so as to extend obliquely in a front-rear direction in a side portion of the center cover 30. This ensures a long junction portion between the center cover 30 and the side covers 60L and 60R, resulting in a sufficient strength of the junction portion, and prevents those components from increasing in their sizes vehicle-widthwise.

### <<Side Covers>>

As illustrated in Fig. 1, the left side cover 60L and the right side cover 60R extend respectively from the left and right of the center cover 30, as viewed from the front, in a substantially downward direction toward the sides of the front wheel 3. The top end portions 60A of the side covers 60L and 60R are joined to the bottom outer end portions 30A of the center cover 30. The side covers 60L and 60R are separate parts from the center cover 30, and they extend from the inner side ends (the line connecting the top end 35t and a bottom end 35b shown in Fig. 1) of the top end portions 60A, as viewed from the front. It should be noted that in the present specification, the term "an end portion of the cover" refers to an end of the portion that can be seen from the outside. For example, when two covers are joined to each other at a junction portion and one of the covers is placed below the other cover, the end portion of the one cover refers to the junction portion, not the portion that is placed under the other cover.

Each of the side covers 60L and 60R has a bulging portion 61 that extends further vehicle-widthwise outward of each of the bottom outer end portions 30A of the center cover 30. At least a portion of the bulging portion 61 is positioned at the same level as that of the bottom outer end portions 30A of the center cover 30. The bulging portion 61 is positioned at about the same level as that of the under bracket 8. The bulging portion 61 is formed at least from vertically at about the same level as the bottom outer end portions 30A of the center cover 30 to about the same level as the under bracket 8. The bulging portion 61 bulges toward the outside. It should be noted that the term "outside" here means, of the outer surfaces side and the inner surface sides of the side covers 60L and 60R, the outer surface sides thereof. More specifically, the "outside" means the side that is exposed externally. The bulging portion 61 is a part that is positioned outward of the bottom outer end portions 30A of the center cover 30 and that bulges vehicle-widthwise outwardly with respect to a virtual curved surface joining the center cover 30 to the side covers 60L and 60 R seamlessly and smoothly. Because of the presence of the bulging portion 61, the tangents of the center cover 30 and the side covers 60L and 60R do not match at the junction portion as viewed from the front, so a recess is formed between the center cover 30 and each of the side covers 60L and 60R. In other words, the valley lines are formed at the junction portions between the center cover 30 and the side covers 60L and 60R. As illustrated in Fig. 4, portions of the bulging portions 61 are visible when viewed in plan, and the flashers 65 are disposed in the visible portions.

As illustrated in Fig. 3, the side covers 60L and 60R slope down rearward in such a manner as to be directed more rearward toward the bottom side. As viewed from a side of the vehicle, each of the bulging portions 61 is formed at the portion of each of the side covers 60L and 60R at which the front-to-rear length thereof is the greatest.

A flasher opening 62 is formed in each of the side covers 60L and 60R. The flasher opening 62 is formed in each of the bulging portions 61. The flasher opening 62 is formed near the top end portion 60A. In other words, the flasher opening 62 is formed near the bottom outer end portion 30A of the center cover 30. The flasher opening 62 is formed in a substantially triangular shape pointing toward the front in the present embodiment, but the shape of the flasher opening 62 is not particularly limited. A side 62a of the flasher opening 62 that is positioned vehicle-widthwise inward extends obliquely in a rearward and upward direction. The side 62a is substantially parallel to the contour of the bottom outer end portion 30A.

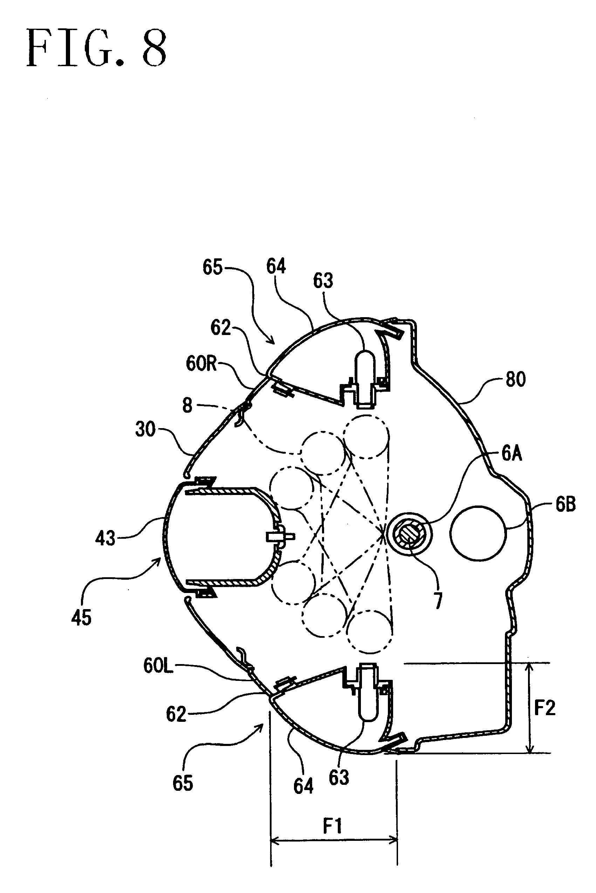

As illustrated in Fig. 8, valves 63 are disposed the flasher openings 62. In addition, a lens 64 for covering an outward area of the valve 63 is fitted in each of the flasher openings 62. The front-to-rear length F1 of the flasher 65 is set longer than the left-to-right length F2 thereof.

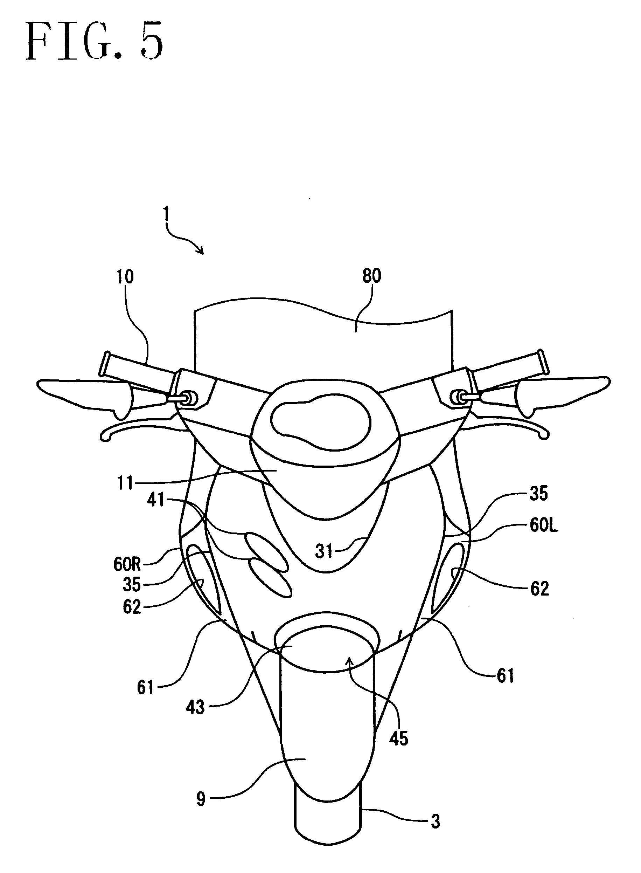

Fig. 4 is a plan view illustrating the state in which the flashers 65 are disposed in the flasher openings 62. Fig. 5 is a plan view illustrating the state in which the flashers 65 are not disposed in the flasher openings 62. As illustrated in Fig. 4, at least a portion of each of the lenses 64 is positioned vehicle-widthwise outward of each of the side covers 60L and 60R at a predetermined location that is along a front-rear direction, as viewed in plan. That is, at least a portion of the lens 64 protrudes from the side cover 60L or 60R at the predetermined location that is along a front-rear direction.

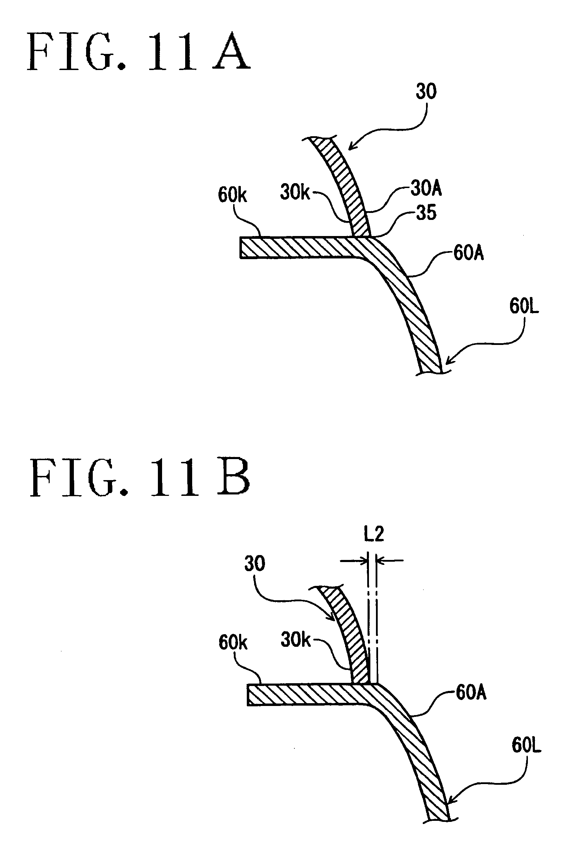

As illustrated in Fig. 11A, the side cover 60L has a bent portion 60k that is bent vehicle-widthwise inwardly (i.e., to the left in Fig. 11A) from the top end portion 60A. Meanwhile, the bottom outer end portion 30A of the center cover 30 has a protruding piece 30k extending obliquely in a downward direction. The center cover 30 and the side cover 60L are assembled together so that the protruding piece 30k abuts onto the bent portion 60k. It should be noted that, as illustrated in Fig. 11B, the protruding piece 30k may be disposed in such a manner as to be displaced inwardly with respect to the bent portion 60k. Reference numeral L2 indicates the amount of displacement. Although not shown in the drawing, the right side cover 60R and the center cover 30 are assembled in a like manner.

Next, the positional relationship between the headlight opening 40 and each of the flasher openings 62 will be described. Note that the lens 43 is fitted in the headlight opening 40, and the lenses 64 are fitted in the flasher openings 62. Accordingly, the positional relationship between the headlight opening 40 and each of the flasher openings 62 is substantially the same as that between the lens 43 and each of the lenses 64.

As illustrated in Fig. 1, a vehicle-widthwise outside end 40o of the headlight opening 40 is positioned inward of a vehicle-widthwise inside end 62i of the flasher opening 62, as viewed from the front. In other words, with respect to a vehicle-width direction, there is a gap L1 between the headlight opening 40 and each of the flasher openings 62. With respect to a vertical direction, the headlight opening 40 and each of the flasher openings 62 partially overlap with each other. In other words, at least a portion of each flasher opening 62 is positioned at a position that is lower than the top end 40t of the headlight opening 40 but higher than a bottom end 40b thereof, as viewed from the front. In addition, the position of a top end 62t of each flasher opening 62 is lower than the top end 40t of the headlight opening 40.

As illustrated in Fig. 3, as viewed from a side of the vehicle, the top end 40t of the headlight opening 40 matches a rear end 40r of the headlight opening 40. The rear end 40r of the headlight opening 40 is positioned slightly rearward of a front end 62f of the flasher opening 62. As viewed from a side of the vehicle, a center 62c of the flasher opening 62 is positioned rearward of the rear end 40r of the headlight opening 40.

Next, the positional relationship between the headlight opening 40 and the under bracket 8 will be described. As illustrated in Fig. 1, the headlight opening 40 is arranged at a position higher than the under bracket 8, as viewed from the front. In addition, as illustrated in Fig. 6, the bottom end 40b of the headlight opening 40 is positioned frontward of the under bracket 8. Since a part of the headlight 45 is positioned closer to the under bracket 8 side than the headlight opening 40, it is necessary to provide a certain space for accommodating the headlight 45 and cables connected to the headlight 45. However, since the bulging portion 30f is provided in the surrounding area of the headlight opening 40, such a space can be provided easily even when the center cover 30 is not disposed more frontward. As a result, the size of at least the center cover with respect to a front-rear direction can be made compact as a whole.

Likewise, since a part of each flasher 65 is positioned closer to the under bracket 8 side than the flasher opening 62, it is necessary to provide a certain space for accommodating the bulb 63 and cables connected to the bulb 63. However, since the bulging portion 61 is provided in the surrounding area of each flasher opening 62, such a space can be provided easily. As a result, the size of at least the side covers 60L and 60R with respect to a vehicle-width direction can be made compact as a whole.

As illustrated in Figs. 6 and 8, each of the bulbs; 63 is disposed upward of the under bracket 8. Also as illustrated in Figs. 6 and 8, each of the bulbs 63 is disposed frontward of the head pipe 6A. The bulging portions 61 of the side covers 60L and 60R are positioned at the same level as that of the under bracket 8.

The afore-described design of the components need not always be provided in combination but sometimes their single presence is sufficient to perform the objective of the present invention and to achieve the desired effects substantially

<<Advantageous Effects of the Embodiment>>

As described above, the motor scooter 1 according to the present embodiment is capable of preventing the front cover 2 from becoming large in size while ensuring a sufficient mudguard function, because it has what is called the movable type front fender 9. As a result, the front portion of the vehicle can be made compact in size. Moreover, the surrounding portion of the handlebar 10 can be made more compact in size in comparison with the case in which they are arranged in a surrounding area of the handlebar 10, because the headlight 45 and the flashers 65 are disposed in the front cover 2.

In the case that the headlight and the left and right flashers are arrayed in a line along a vehicle width direction as in the scooter type vehicle described in JP 10-226374A, it is necessary to ensure a sufficient gap between the headlight and the left and right flashers in order to ensure visibility of the light from the headlight and the light from the left and right flashers. To ensure the just-mentioned gap, it is necessary to make an upper portion of the front cover large along a vehicle width direction. This results in the problem that the front portion of the vehicle becomes large.

It may be conceivable to dispose the flashers in a lower part of the front cover. However, the scooter type vehicle has an under bracket that joins a lower part of the steering shaft and upper parts of the left and right fork pipes. When the rider turns the handlebar, the under bracket is turned via the steering shaft. The under bracket has a certain width with respect to a vehicle-width direction. For this reason, in order to turn the under bracket without causing the under bracket to make contact with the front cover, it is necessary to provide a certain gap between the under bracket and the front cover. Accordingly, when the flashers are to be disposed in a lower portion of the front cover at the same level as that of the under bracket, it is necessary that the flashers be disposed vehicle-widthwise outward of the clearance space for the under bracket. As a consequence, the size of the front cover with respect to a vehicle-width direction becomes large, causing the front portion of the vehicle to become large.

On the other hand, it may appear possible to dispose the flashers frontward of the clearance space for the under bracket. In this case, however, the front cover bulges frontward greatly, causing the front portion of the vehicle to become large.

Furthermore, it may appear possible to dispose the flashers, within the front cover, downward of the headlight and upward of the under bracket. In this case, however, it is necessary to provide a gap between the left and right flashers, so the front cover becomes large with respect to a vehicle-width direction. As a consequence, the front portion of the vehicle becomes large.

In contrast, in the motor scooter 1 according to the present embodiment, the bulging portions 61 are formed at the positions in the side covers 60L and 60R that are at about the same level as that of the under bracket 8, in order to provide a clearance space for the under bracket 8. Moreover, the flasher openings 62 are formed in the bulging portions 61. The flashers 65 are disposed in the bulging portions 61 so that the bulbs 63 (lamps, light bulbs or other light sources) are disposed at the positions higher than the under bracket 8. In the present embodiment, the bulging portions 61 are formed at the positions of the side covers 60L and 60R that are at about the same level as that of the under bracket 8, the positions that need to be widest, and the flasher openings 62 are provided in the bulging portions 61 therein. Therefore, a sufficiently large gap L1 (see Fig. 1) can be provided between the headlight opening 40 and each flasher opening 62 without inereasing the size of the front cover 2 as a whole, so high visibility of the flashers 65 can be ensured. Moreover, since the bulging portions 61 are formed only in the side covers 60L and 60R, the front cover 2 does not stick out vehicle-widthwise. Thus, the front cover 2 can be made compact in size.

As a result, the motor scooter 1 allows the front portion of the vehicle to be compact in size while ensuing high visibility of the flashers and a sufficient mudguard function.

In addition, the headlight opening 40 is arrange at a position higher than the under bracket 8, as viewed from the front. This allows the headlight 43 to be disposed relatively rearwardly (see Fig. 6). As a result, the front cover 2 sticks out less frontward, allowing the front cover 2 to be compact in size.

Moreover, in the present embodiment, the bulb 63 of each flasher 65 is disposed upward of the under bracket 8, as illustrated in Fig. 6. This allows the bulb 63 and the under bracket 8 not to make contact with each other even when the bulb 63 is disposed relatively vehicle-widthwise inwardly. As a result, size reduction of the front cover 2 is facilitated. In additions the under bracket 8 is not likely to be an obstacle during maintenance, for example, replacement of the bulb 63. Therofore, maintenance of the bulb 63 is easy.

In order to ensure the clearance space for the under bracket 8, the portion of the center cover 30 that is in front of the under bracket 8 is disposed relatively frontward. As a result, the front portion of the center cover 30 by disposing the headlight 45 at a relatively low position can be utilized effectively as a space for accommodating the headlight 45. This serves to make the frontward protrusion of the headlight 45 less noticeable. As illustrated in Fig. 1, in the motor scooter 1, the top end 62t of the flasher opening 62, is positioned upward of the bottom end 40b of the headlight opening 40. In other words, the top end of the flasher 65 is positioned upward of the bottom end of the headlight 45. Since the headlight 45 is disposed at a relatively low position in this way, the front portion of the vehicle can be made compact in size.

As illustrated in Fig. 1, the bottom end 40b of the headlight opening 40 is positioned upward of the bottom end 62b of the flasher opening 62. In other words, the bottom end of the headlight 45 is positioned upward of the bottom end of the flasher 65 This means that there is a portion in which the position of the headlight 45 and the position of each flasher 65 do not overlap vertically. Therefore, sufficient visibility of the headlight 45 and the flashers 65 can be ensured. As a result, the front portion of the vehicle can be made compact in size while ensuring the high visibility.

As illustrated in Fig. 1, a vehicle-widthwise outside end 40o of the headlight opening 40 is positioned inward of a vehicle-widthwise inside end 62i of the flasher opening 62, as viewed from the front. This means that the headlight 45 and the flashers 65 are spaced apart along a left-right direction. Therefore, sufficient visibility of the headlight 45 and the flashers 65 can be ensured.

As illustrated in Fig. 8, the front-to-rear length F1 of each flasher 65 is set longer than the left-to-right length F2 thereof. Therefore, the front cover 2 can be made compact in size along a left-right direction while ensuring a sufficient size of the flashers 65.

As illustrated in Fig. 6, a rear end 45r of the headlight 45 is positioned rearward of a front end 8f of the under bracket 8. This means that the amount of frontward protrusion of the headlight 45 is small. As a result, the front portion of the vehicle can be made compact in size.

As illustrated in Fig. 6, the front end 8f of the under bracket 8 is positioned rearward of the front end 65f of each flasher 65 and frontward of the rear end 65r of each flasher 65. As a result, the front-to-rear length of the side covers 60L and 60R can be made shorter than in the case that the entire flasher 65 is disposed frontward of, or rearward of, the under bracket 8.

The front end 8f of the under bracket 8 is positioned frontward of the rear end of the lens 64. Therefore, the front-to-rear length of the side covers 60L and 60R can be made shorter than in the case that the entire under bracket 8 is positioned rearward of the rear end of the lens 64.

As illustrated in Fig. 1, the top end 35t of the junction portion of the center cover 30 to each of the side covers 60L and 60R is positioned downward of the top end 40t of the headlight opening 40 and upward of the bottom end 40b thereof, as viewed from the front. Since the top ends of the side covers 60L and 60R are disposed at low positions, the vertical length of the side covers 60L and 60R can be kept short.

As illustrated in Fig. 1, the bottom end 35b of the junction portion of the center cover 30 to each of the side covers 60L and 60R is positioned downward of the bottom end 40b of the headlight opening 40, as viewed from the front. In other words, the headlight 45 is positioned upward of the bottom end 35b. As a result, the amount of frontward protrusion of the headlight 45 can be kept small.

As illustrated in Fig. 6, each of the flashers 65 is disposed at a position overlapping the head pipe 6A, as viewed from a side of the vehicle. Therefore, the front-to-rear length of the side covers 60L and 60R can be made shorter than in the case that the flashers 65 are disposed frontward of, or rearward of, the head pipe 6A.

As illustrated in Fig. 1, a vertically middle position of the headlight opening 40 is positioned at a position lower than a vertically middle position of the center cover 30 as viewed from the front; and at least a portion of the center cover 30 that is higher than the vertically middle position thereof is formed in such a shape that its width becomes narrower and narrower toward its top end, as viewed from the front. Thus, the upper portion of the center cover 30 is allowed to be compact in size, and as a result, the size of the front cover 2 can be kept small.

It should be noted that although the center cover 30, the left side cover 60L, and the right side cover 60R may be formed integrally, they are separate parts in the present embodiment. Therefore, the center cover 30 can be kept small. Likewise, the side covers 60L and 60R can be kept small.

As illustrated in Fig. 8, the bulb 63 of the flasher 65 is disposed frontward of the head pipe 6A. As a result, the head pipe 6A is not likely to be an obstacle during maintenance, for example, replacement of the bulb 63. Therefore, maintenance of the bulb 63 is easy.

The bulging portion 61 of each of the side covers 60L and 60R bulges toward an outside. As a result, visibility of the flasher 65 can be further improved.

In addition, as illustrated in Fig. 4, the lens 64 bulges toward the outside further from the bulging portion 61 of each of the side covers 60L and 60R. Thus, visibility of the flasher 65 can be further improved.

As illustrated in Fig. 1, as viewed from the front, the flasher 65 is positioned vehicle-widthwise outward of the bottom outer end portion 30A of the center cover 30. Thereby, visibility of the flasher 65 can be improved.

Thus, this embodiment comprises a motor scooter 1 which has a front cover 2 having a center cover 30 and side covers 60L, 60R, and a movable type front fender 9. A headlight opening 40 is formed in the center cover 30. Each of the side covers 60L, 60R has a flasher opening 62. Each of the side covers 60L, 60R has bulging portions 61 each including a portion that is positioned, as viewed from the front, at substantially the same level as that of an under bracket 8 and vehicle-widthwise outward of a top end portion 60A. The flasher opening 62 is formed in the bulging portion 61 so that a bulb of a flasher 65 is disposed at a position higher than the under bracket 8.

Only selected embodiments have been chosen to illustrate the present invention To those skilled in the art, however, it will be apparent from the foregoing disclosure that various changes and modifications can be made herein without departing from the scope of the invention as defined in the appended claims. Furthermore, the foregoing description of the embodiments according to the present invention is provided for illustration only, and not for limiting the invention as defined by the appended claims and their equivalents.

## Claims

1. A scooter type vehicle comprising:
a front wheel (3);
a head pipe (6A);
a front fork (4) having fork pipes (5L, 5R) disposed on the left and right of the front wheel (3), a steering shaft (7) rotatably supported by the head pipe (6A), and an under bracket (8) for connecting the steering shaft (7) to the front fork (4) and turning together with the steering shaft (7);
a vehicle body cover (90) having a front cover portion (2) covering the head pipe (6A), and a foot board portion (70) joined to the front cover portion (2);
a mudguard body (9) positioned between the front wheel (3) and the vehicle body cover (90) and configured to turn together with the under bracket (8);
a headlight (45) disposed in a headlight opening (40) formed in the front cover portion (2); and
flashers (65) disposed in flasher openings (62) formed in the front cover portion (2) and positioned outward of the headlight (45) in a vehicle-widthwise direction, each of the flashers (65) having a bulb (63), and
wherein the front cover portion (2) comprises:
a center cover (30) positioned in front of the head pipe (6A), the center cover (30) having the headlight opening (40) formed at a position upward of the under bracket (8),
a pair of left and right side covers (60L, 60R) positioned on respective sides of the front wheel (3), each of said side covers (60L, 60R) having a bulging portion (61) including a portion positioned at about the level of the under bracket (8), the bulging portions (61) are bulged towards the outside of the vehicle-widthwise direction,
and wherein a junction portion is disposed between the center cover (30) and each of said side covers (60L, 60R), wherein the position of a top end (62t) of each flasher opening (62) is lower than a top end (40t) of the headlight opening (40), and at least a portion of each flasher opening (62) is positioned at a position higher than a bottom end (40b) of the headlight opening (40),
said flasher openings (62) are formed in the bulging portions (61) so that the bulbs (63) are disposed at positions higher than that of the under bracket (8), and
a top end (35t) of each junction portion of the center cover (30) to the side covers (60L, 60R) is positioned, as viewed from the front, downward of a top end (40t) of the headlight opening (40) and upward of a bottom end (40b) thereof, and/or a bottom end (35b) of each junction portion of the center cover (30) to the side covers (60L, 60R) is positioned, as viewed from the front, downward of the bottom end (40b) of the headlight opening (40), and a front end (8f) of the under bracket (8) is positioned rearward of a front end (65f) of each of the flashers (65), **characterized in that** the front end (8f) of the under bracket (8) is positioned frontward of a rear end (65c) of each of the flashers (65) and each of the flashers (65) is disposed at a position overlapping the head pipe (6A), as viewed from a side of the vehicle.

2. The scooter type vehicle according to claim 1, wherein the under bracket (8) is adapted to connect a lower end portion of the steering shaft (7) to the fork pipes (5L, 5R).

3. The scooter type vehicle according to claims 1 or 2, wherein the center cover (30) having bottom outer end portions (30a), upper portions of them are positioned in a vehicle-widthwise direction outward of lower portions thereof as viewed from the front, wherein, top end portions of the side covers (60L, 60R) being joined to the bottom outer end portions (30A) of the center cover (30), wherein each bulging portion (61) including a portion positioned outwards of the top end portion (60A) of the side cover (60L, 60R) when considering a vehicle-widthwise direction.

4. The scooter type vehicle according to one of the preceding claims 1 to 3, wherein a bottom end (40b) of the headlight opening (40) is positioned upward of a bottom end (62b) of each of the flasher openings (62), while a vehicle-widthwise outside end (40o) of the headlight opening (40) is positioned, as viewed from the front, inward of a vehicle-widthwise inside end (62i) of each of the flasher openings (62).

5. The scooter type vehicle according to any of claims 1 to 4, wherein a bottom end of the headlight (45) is positioned upward of a bottom end of each of the flashers (65), while a rear end (45r) of the headlight (45) is positioned rearward of a front end (8f) of the under bracket (8).

6. The scooter type vehicle according to any of claims 1 to 5, wherein a front-to-rear length (F1) of each of the flashers (65) is longer than a left-to-right length (F2) thereof.

7. The scooter type vehicle according to any of claims 1 to wherein each of the flashers (65) has a lens (64) covering an outward area of the bulb (63); and a front end (8f) of the under bracket (8) is positioned frontward of a rear end of each of the lens (64).

8. The scooter type vehicle according to any of claims 1 to 7, wherein a vertically middle position of the headlight opening (40) is positioned at a position lower than a vertically middle position of the center cover (30) as viewed from the front; and at least a portion of the center cover (30) that is higher than the vertically middle position thereof is formed in such a shape that its width becomes narrower and narrower toward its top end, as viewed from the front.

9. The scooter type vehicle according to any of claims 1 to 8, wherein the left side cover (60L) and the right side cover (60R) are separate parts.

10. The scooter type vehicle according to any of claims 1 to 9, comprising a lens (64) covering an outward area of the bulb (63) of each of the flashers (65); and wherein the lens (64) bulges toward the outside further from the bulging portion (61) of each of the side covers (60L, 60R).

11. The scooter type vehicle according to any of claims 1 to 10, wherein each of the flashers (65) is positioned vehicle-widthwise outward of a bottom outer end portion (30A) of the center cover (30), as viewed from the front.

12. The scooter type vehicle according to any of claims 1 to 4, 6 and 8 to 11, wherein a rear end (45r) of the headlight (45) is positioned rearward of a front end (8f) of the under bracket.

## Patentansprüche

1. Rollerartiges Fahrzeug, umfassend:
ein Vorderrad (3);
einen Lenkkopf (6A);
eine Vordergabel (4), die Gabelrohre (5L, 5R) hat, die an der linken und rechten Seite des Vorderrades (3) angeordnet sind, ein Lenkrohr (7), das drehbar am Lenkkopf (6A) gestützt ist, und eine Gabelbrücke (8), die das Lenkrohr (7) mit der Vordergabel (4) verbindet und sich zusammen mit dem Lenkrohr (7) dreht;
eine Fahrzeugkarosserie (90), die einen vorderen Abdeckabschnitt (2), der den Lenkkopf (6A) abdeckt, und einen Trittbrettabschnitt (70), der mit dem vorderen Abdeckabschnitt (2) verbunden ist, aufweist;
ein Kotflügelteil (9), das zwischen dem Vorderrad (3) und der Fahrzeugkarosserie (90) angeordnet ist und dazu ausgelegt ist, sich zusammen mit der Gabelbrücke (8) zu drehen;
einen Scheinwerfer (45), der in einer Scheinwerferöffnung (40) angeordnet ist, die im vorderen Abdeckabschnitt (2) ausgebildet ist, und
Blinker (65), die in Blinkeröffnungen (62) angeordnet sind, die in dem vorderen Abdeckabschnitt (2) ausgebildet sind und die, in Richtung der Breite des Fahrzeugs,
weiter außen angeordnet sind als der Scheinwerfer (45), wobei jeder der Blinker (65) eine Lampe (63) hat, und
wobei der vordere Abdeckabschnitt (2) umfasst:
eine mittlere Abdeckung (30), die vor dem Lenkkopf (6A) angeordnet ist, wobei die mittlere Abdeckung (30) die Scheinwerferöffnung (40) aufweist, die an einer Position oberhalb der Gabelbrücke (8) ausgebildet ist,
ein Paar von einer linken und rechten Seitenverkleidung (60L, 60R), das auf den jeweiligen Seiten des Vorderrades (3) angebracht ist, wobei jede der Seitenabdeckungen (60L, 60R) einen gewölbten Abschnitt (61) aufweist, der einen Abschnitt aufweist, der etwa auf der Höhe der Gabelbrücke (8) ausgebildet ist, wobei die gewölbten Abschnitte (61) in Richtung der Breite des Fahrzeugs nach außen gewölbt sind, und
wobei ein Verbindungsabschnitt zwischen der mittleren Abdeckung (30) und jeder der Seitenabdeckungen (60L, 60R) ausgebildet ist, wobei die Position eines oberen Endes (62t) jeder der Blinkeröffnungen (62) niedriger ist als ein oberes Ende (40t) der Scheinwerferöffnung (40), und wenigstens ein Abschnitt jeder der Blinkeröffnungen (62) oberhalb von einem unteren Ende (40b) der Scheinwerferöffnung (40) angeordnet ist,
wobei die jeweiligen Blinkeröffnungen (62) in den gewölbten Abschnitten (61) angeordnet sind, so dass die Lampen (63) oberhalb der Gabelbrücke (8) ausgebildet sind, und
ein oberes Ende (35t) jedes Verbindungsabschnitts der mittleren Abdeckung (30) mit den Seitenabdeckungen (60L, 60R), von vorne gesehen, unterhalb eines oberen Endes und oberhalb eines unteren Endes (40b) der Scheinwerferöffnung (40) ausgebildet ist,
und/oder ein unteres Ende (35b) jedes Verbindungsabschnitts der mittleren Abdeckung (30) mit den Seitenabdeckungen (60L, 60R), von vorne gesehen, unterhalb des unteren Endes (40b) der Scheinwerferöffnung (40) ausgebildet ist, und ein vorderes Ende (8f) der Gabelbrücke (8) hinter einem vorderen Ende (65f) von jedem der Blinker (65) ausgebildet ist,
**dadurch gekennzeichnet, dass** das vordere Ende (8f) der Gabelbrücke (8) vor einem hinteren Ende (65c) von jedem der Blinker (65) ausgebildet ist und jeder der Blinker (65) an einer Stelle ausgebildet ist, die sich, von einer Seite des Fahrzeugs gesehen, mit dem Lenkkopf (6A) überlappt.

2. Rollerartiges Fahrzeug nach Anspruch 1, wobei die Gabelbrücke (8) angepasst ist, so dass diese einen unteren Endabschnitt des Lenkrohrs (7) mit den Gabelrohren (5L, 5R) verbindet.

3. Rollerartiges Fahrzeug nach einem der Ansprüche 1 oder 2, wobei die mittlere Abdeckung (30) untere äußere Endabschnitte (30a) hat, wobei deren obere Abschnitte, in Richtung der Breite des Fahrzeugs von vorne gesehen, außerhalb der unteren Abschnitte angeordnet sind,
wobei obere Endabschnitte der Seitenabdeckungen (60L, 60R) mit den unteren äußeren Endabschnitten (30a) der mittleren Abdeckung (30) verbunden sind, wobei jeder gewölbte Abschnitt (61) einen Abschnitt umfasst, der in Richtung der Breite des Fahrzeugs außerhalb des oberen Endabschnitts (60A) der Seitenabdeckungen (60L, 60R) angeordnet ist.

4. Rollerartiges Fahrzeug nach einem der vorhergehenden Ansprüche 1 bis 3, wobei ein unteres Ende (40b) der Scheinwerferöffnung (40) oberhalb von einem unteren Ende (62b) von jeder der Blinkeröffnungen (62) angeordnet ist, während ein in Richtung der Breite des Fahrzeugs äußeres Ende (40o) der Scheinwerferöffnung (40) von vorne gesehen, innerhalb eines inneren Endes (62i) jeder der Blinkeröffnungen (62) angeordnet ist.

5. Rollerartiges Fahrzeug nach einem der Ansprüche 1 bis 4, wobei ein unteres Ende des Scheinwerfers (45) oberhalb eines unteres Endes von jedem der Blinker (65) angeordnet ist, während ein hinteres Ende (45r) des Scheinwerfers (45) hinter einem vorderen Ende (8f) der Gabelbrücke (8) angeordnet ist.

6. Rollerartiges Fahrzeug nach einem der Ansprüche 1 bis 5, wobei eine sich von vorne nach hinten erstreckende Länge (F1) von jedem der Blinker (65) länger ist als eine sich von links nach rechts erstreckende Länge (F2) derselben.

7. Rollerartiges Fahrzeug nach einem der Ansprüche 1 bis 6, wobei jeder der Blinker (65) eine Linse (64) hat, die eine umliegende Fläche der Lampe (63) abdeckt; und ein vorderes Ende (8f) der Gabelbrücke (8) vor einem hinteren Ende jeder der Linsen (64) angeordnet ist.

8. Rollerartiges Fahrzeug nach einem der Ansprüche 1 bis 7, wobei eine senkrecht mittlere Position der Scheinwerferöffnung (40), von vorne gesehen, niedriger als eine senkrecht mittlere Position der mittleren Abdeckung (30) angeordnet ist, und wenigstens ein Abschnitt der mittleren Abdeckung (30), der, von vorne gesehen, über der senkrechten mittleren Position derselben liegt, in einer solchen Form ausgebildet ist, das seine Breite zum oberen Ende hin immer schmaler wird.

9. Rollerartiges Fahrzeug nach einem der Ansprüche 1 bis 8, wobei die linke Seitenabdeckung (60L) und die rechte Seitenabdeckung (60R) separate Teile sind.

10. Rollerartiges Fahrzeug nach einem der Ansprüche 1 bis 9, mit einer Linse (64), die eine umliegende Fläche der Lampe (63) von jedem der Blinker (65) abdeckt; und wobei sich die Linse (64) von dem gewölbten Abschnitt (61) von jeder der Seitenabdeckungen (60L, 60R) weiter nach außen wölbt.

11. Rollerartiges Fahrzeug nach einem der Ansprüche 1 bis 10, wobei jeder der Blinker (65), in Richtung der Breite des Fahrzeugs von vorne gesehen, außerhalb eines unteren äußeren Endes (30a) der mittleren Abdeckung (30) angeordnet ist.

12. Rollerartiges Fahrzeug nach einem der Ansprüche 1 bis 4, 6 und 8 bis 11, wobei ein hinteres Ende (45r) des Scheinwerfers (45) hinter einem vorderen Ende (8f) der Gabelbrücke (8) angeordnet ist.

## Revendications

1. Véhicule de type scooter comprenant :
une roue avant (3) ;
un tube de tête (6A) ;
une fourche avant (4) comportant des tubes de fourche (5L, 5R) agencés à gauche et à droite de la roue avant (3), un axe de direction (7) supporté de façon rotative par le tube de tête (6A), et un té inférieur(8) pour connecter l'axe de direction (7) à la fourche avant (4) et pour tourner conjointement avec l'axe de direction (7) ;
un carénage de corps de véhicule (90) comportant une partie de carénage avant (2) qui couvre le tube de tête (6A) et une partie de plancher (70) rattachée à la partie de carénage avant (2) ;
un corps de garde-boue (9) positionné entre la roue avant (3) et le carénage de corps de véhicule (90) et configuré pour tourner conjointement avec le té inférieur (8) ;
un phare (45) agencé dans une ouverture de phare (40) formée dans la partie de carénage avant (2) ; et
des clignotants (65) agencés dans des ouvertures de clignotant (62) formées dans la partie de carénage avant (2) et positionnés vers l'extérieur du phare (45) en direction de la largeur du véhicule, chacun des clignotants (65) comportant une ampoule (63), et
dans lequel la partie de carénage avant (2) comprend :
un carénage central (30) positionné devant le tube de tête (6A), l'ouverture de phare (40) du carénage central (30) étant formée à une position située au-dessus du té inférieur (8),
une paire de carénages latéraux gauche et droit (60L, 60R) positionnés sur des côtés respectifs de la roue avant (3), chacun desdits carénages latéraux (60L, 60R) comportant une partie saillante (61) qui comprend une partie positionnée environ au niveau du té inférieur (8), les parties saillantes (61) faisant saillie vers l'extérieur en direction de la largeur du véhicule,
et dans lequel une partie de jonction est agencée entre le carénage central (30) et chacun desdits carénages latéraux (60L, 60R), dans lequel la position de l'extrémité supérieure (62t) de chaque ouverture de clignotant (62) est plus basse qu'une extrémité supérieure (40t) de l'ouverture de phare (40), et au moins une partie de chaque ouverture de clignotant (62) se trouve dans une position plus haute qu'une extrémité inférieure (40b) de l'ouverture de phare (40),
lesdites ouvertures de clignotant (62) sont formées dans les parties saillantes (61) de telle sorte que les ampoules (63) se trouvent dans des positions plus hautes que le té inférieur (8), et
une extrémité supérieure (35t) de chaque partie de jonction entre le carénage central (30) et les carénages latéraux (60L, 60R) est positionnée, dans une vue depuis l'avant, sous une extrémité supérieure (40t) de l'ouverture de phare (40) et au-dessus d'une extrémité inférieure (40b) de celle-ci, et/ou une extrémité inférieure (35b) de chaque partie de jonction entre le carénage central (30) et les carénages latéraux (60L, 60R) est positionnée, dans une vue depuis l'avant, sous l'extrémité inférieure (40b) de l'ouverture de phare (40), et une extrémité frontale (8f) du té inférieur (8) est positionnée derrière une extrémité frontale (65f) de chacun des clignotants (65),
**caractérisé en ce que** l'extrémité frontale (8f) du té inférieur (8) est positionnée devant une extrémité arrière (65c) de chacun des clignotants (65) et chacun des clignotants (65) se trouve dans une position qui chevauche le tube de tête (6A), dans une vue depuis un côté du véhicule.

2. Véhicule de type scooter selon la revendication 1, dans lequel le té inférieur (8) est adapté pour connecter une partie d'extrémité inférieure de l'axe de direction (7) avec les tubes de fourche (5L, 5R).

3. Véhicule de type scooter selon la revendication 1 ou 2, dans lequel le carénage central (30) comporte des parties d'extrémité externes inférieures (30a), des parties supérieures de celles-ci étant positionnées vers l'extérieur de parties inférieures correspondantes en direction de la largeur du véhicule, dans une vue depuis l'avant, dans lequel des parties d'extrémité supérieure des carénages latéraux (60L, 60R) sont rattachées aux parties d'extrémité externes inférieures (30A) du carénage central (30), dans lequel chaque partie saillante (61) comprend une partie positionnée vers l'extérieur de la partie d'extrémité supérieure (60A) du carénage latéral (60L, 60R) vu en direction de la largeur du véhicule.

4. Véhicule de type scooter selon l'une des revendications 1 à 3, dans lequel une extrémité inférieure (40b) de l'ouverture de phare (40) se trouve plus haut qu'une extrémité inférieure (62b) de chacune des ouvertures de clignotant (62), alors qu'une extrémité externe selon la largeur du véhicule (40o) de l'ouverture de phare (40) est positionnée, dans une vue depuis l'avant, à l'intérieur d'une extrémité interne selon la largeur du véhicule (62i) de chacune des ouvertures de clignotant (62).

5. Véhicule de type scooter selon l'une quelconque des revendications 1 à 4, dans lequel une extrémité inférieure du phare (45) se trouve plus haut qu'une extrémité inférieure de chacun des clignotants (65), alors qu'une extrémité arrière (45r) du phare (45) se trouve derrière une extrémité frontale (8f) du té inférieur (8).

6. Véhicule de type scooter selon l'une quelconque des revendications 1 à 5, dans lequel une longueur d'avant en arrière (F1) de chacun des clignotants (65) est supérieure à une longueur de gauche à droite (F2) correspondante.

7. Véhicule de type scooter selon l'une quelconque des revendications 1 à 6, dans lequel chacun des clignotants (65) comporte une lentille (64) qui recouvre une zone qui s'étend vers l'extérieur de l'ampoule (63) ; et une extrémité frontale (8f) du té inférieur (8) se trouve devant une extrémité arrière de chacune des lentilles (64).

8. Véhicule de type scooter selon l'une quelconque des revendications 1 à 7, dans lequel une position moyenne en sens vertical de l'ouverture de phare (40) se trouve plus bas qu'une position moyenne en sens vertical du carénage central (30) vu depuis l'avant ; et au moins une partie du carénage central (30) qui est plus haute que la position moyenne en sens vertical correspondante est conformée de telle sorte que sa largeur décroît vers son extrémité supérieure, vu depuis l'avant.

9. Véhicule de type scooter selon l'une quelconque des revendications 1 à 8, dans lequel le carénage latéral gauche (60L) et le carénage latéral droit (60R) sont des pièces séparées.

10. Véhicule de type scooter selon l'une quelconque des revendications 1 à 9, comprenant une lentille (64) qui recouvre une zone externe de l'ampoule (63) de chacun des clignotants (65) ; et dans lequel la lentille (64) fait saillie vers l'extérieur en dépassant de la partie saillante (61) de chacun des carénages latéraux (60L, 60R).

11. Véhicule de type scooter selon l'une quelconque des revendications 1 à 10, dans lequel chacun des clignotants (65) est positionné vers l'extérieur, selon la largeur du véhicule, d'une partie d'extrémité externe inférieure (30A) du carénage central (30), vu depuis l'avant.

12. Véhicule de type scooter selon l'une quelconque des revendications 1 à 4, 6 et 8 à 11, dans lequel une extrémité arrière (45r) du phare (45) se trouve derrière une extrémité frontale (8f) du té inférieur.
